(19) **Europäisches Patentamt**

**European Patent Office**

**Office européen des brevets**

(11) **EP 0 576 342 B1**

(12) **FASCICULE DE BREVET EUROPEEN**

(45) Date de publication et mention de la délivrance du brevet:
**13.11.2002 Bulletin 2002/46**

(51) Int Cl.7: **G09G 3/18**, G02F 1/1335

(21) Numéro de dépôt: **93401592.6**

(22) Date de dépôt: **22.06.1993**

(54) **Dispositif d'affichage à cristal liquide nématique en hélice**

Verdrillt-nematische Flüssigkristallanzeigevorrichtung

Twisted nematic liquid crystal display device

(84) Etats contractants désignés:
**DE ES GB IT**

(30) Priorité: **26.06.1992 FR 9207831**

(43) Date de publication de la demande:
**29.12.1993 Bulletin 1993/52**

(60) Demande divisionnaire:
**01100823.2 / 1 103 839**

(73) Titulaire: **THOMSON multimedia**
**92648 Boulogne Cédex (FR)**

(72) Inventeur: **Haas, Gunther**
**F-92400 Courbevoie Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 272 820**      **EP-A- 0 349 900**
**EP-A- 0 350 383**      **US-A- 5 184 237**

- **IBM TECHNICAL DISCLOSURE BULLETIN vol. 33, no. 12, Mai 1991, ARMONK, USA pages 201 - 202 , XP121640 'Multicolor Parallel-Oriented Nematik Liquid Crystal Displays Using Optical Compensation Films'**
- **PATENT ABSTRACTS OF JAPAN vol. 16, no. 365 (P-1397)6 Août 1992**
- **DATABASE WPIL Week 9223, Derwent Publications Ltd., London, GB; AN 92-187890**

## Description

La présente invention se rapporte aux dispositifs électro-optiques à commande électrique permettant l'affichage d'images, directement sur un panneau modulant la lumière par transmission, ou indirectement par projection sur un écran. L'invention concerne plus particulièrement les dispositifs mettant en oeuvre un cristal liquide disposé entre deux polariseurs croisés et présentant, en l'absence de champ électrique modulateur, une structure nématique en hélice. Dans cette configuration, on peut s'arranger pour que la transparence décroisse lorsqu'on soumet la cellule à cristal liquide à une tension électrique croissante. L'image visualisée présente un défaut d'uniformité qui dépend des conditions angulaires d'observation. Pour diminuer cet inconvénient, il a déjà été proposé, notamment EP-A-0 350 383, d'associer à la couche de cristal liquide un ou plusieurs films compensateurs faits d'un milieu optique biréfringent uniaxe, l'ensemble étant situé entre les deux polariseurs croisés. Cette technique permet d'obtenir un rapport de contraste plus homogène dans un angle d'observation plus ouvert. La présente invention propose un perfectionnement particulièrement intéressant avec les couches de cristal liquide de type TN.

L'invention a donc pour objet un dispositif d'affichage à commande électrique mettant en oeuvre une couche de cristal liquide nématique en hélice de type TN disposée entre deux polariseurs, des moyens compensateurs uniaxes à biréfringence négative étant associés à ladite couche à l'intérieur de la cavité optique formée par lesdits polariseurs, caractérisé en ce que l'axe optique desdits moyens compensateurs uniaxes à biréfringence négative présente une inclinaison par rapport à la normale des faces principales de ladite couche, l'angle d'inclinaison étant légèrement incliné par rapport à ladite normale.

L'invention sera mieux comprise au moyen de la description ci-après et des figures annexées, parmi lesquelles :

la figure 1 est une vue isométrique d'un dispositif d'affichage selon l'invention,
la figure 2 est une vue de profil du dispositif de la figure 1,
la figure 3 est un diagramme explicatif du fonctionnement de la cellule à cristal liquide de la figure 1,
la figure 4 est un diagramme précisant la réponse angulaire de la cellule à cristal liquide de la figure 1, en l'absence de moyen compensateur,
la figure 5 est une vue de profil (a) et une vue frontale (b) d'un example de réalisation de l'invention,
la figure 6 est une vue de profil (a) et une vue frontale (b) d'un example non revendiqué,
la figure 7 schématise un dispositif d'affichage à projection de type connu,
les figures 8 et 9 illustrent la dépendance angulaire du rapport de contraste avec des éléments compensateurs ayant l'axe optique légèrement incliné, soit par rapport aux faces de la couche de cristal liquide, soit par rapport à leur normale.

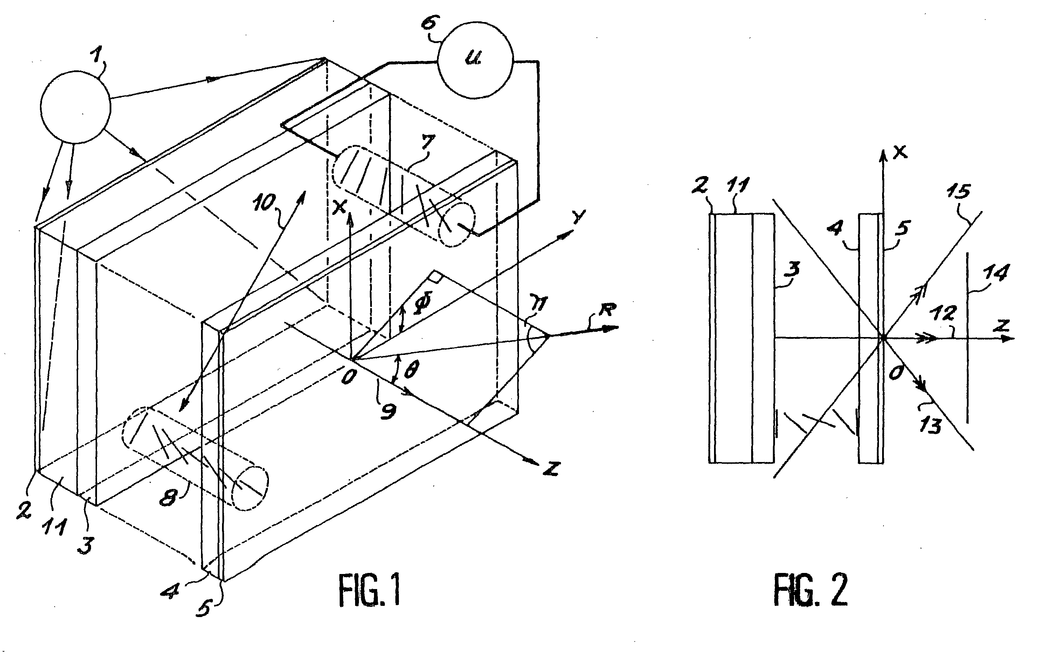

Sur la figure 1, on peut voir deux lames support transparentes 3 et 4 qui délimitent une cavité à faces parallèles traitées au moyen de surfactant et par un procédé d'alignement, afin de communiquer aux molécules d'un cristal liquide nématique qui remplit cette cavité des orientations particulières. La zone cylindrique 7 illustre cette orientation moléculaire en hélice en l'absence de champ électrique de commande. A proximité immédiate de la lame 3, les molécules sont orientées dans la direction 10 qui est inclinée à 45 degrés par rapport aux axes X et Y. A proximité immédiate de la lame 4, les molécules sont orientées dans la direction 9 orthogonale à la direction 10. A mi-distance des faces internes des lames 3 et 4, les molécules de cristal liquide sont orientées selon l'axe X que l'on suppose correspondre à la direction verticale du dispositif d'affichage. Les lames 3 et 4 sont équipées d'électrodes transparentes reliées à un générateur électrique 6, afin de créer un champ électrique de direction Z et d'intensité proportionnelle à la tension électrique u délivrée par le générateur 6. Ce champ électrique de commande modifie l'orientation moléculaire en hélice comme illustré dans la zone cylindrique 8. En l'absence de champ de commande, l'orientation moléculaire est symétrique et capable de faire tourner de 90 degrés la polarisation rectiligne d'un rayonnement lumineux pénétrant dans la couche de cristal liquide par l'une de ses faces principales et émergeant par son autre face principale . Si l'ensemble 3-4 est placé entre un polariseur 2 et un analyseur 5 de telle façon que ces éléments imposent les directions 10 et 9, on voit que l'orientation en hélice 7 permettra à la lumière produite par la source lumineuse 1 de traverser le dispositif d'affichage le mieux possible, ceci en l'absence de champ électrique de commande, ce qui caractérise un état "ouvert". Au contraire, l'action d'un champ électrique de commande aura pour effet de diminuer le pouvoir rotatoire de la couche de cristal liquide et du même coup les polariseurs croisés 2 et 5 auront sur la lumière une action obturatrice correspondant à un état "fermé".

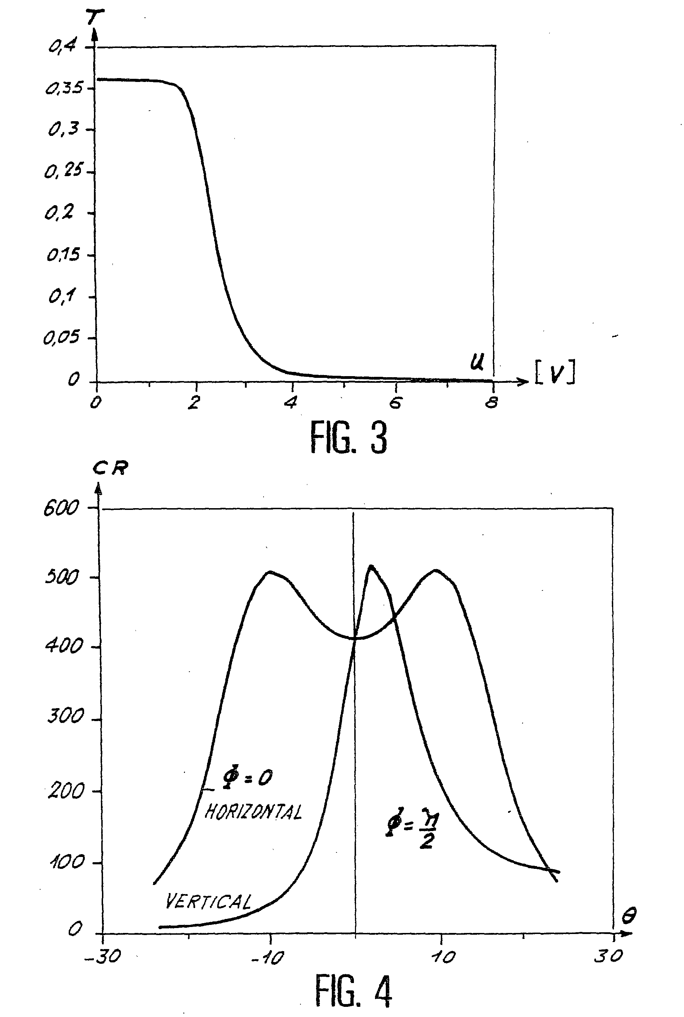

Entre le polariseur 2 et la lame transparente 3, ou bien entre la lame 4 et l'analyseur 5, on a prévu, conformément à l'invention, d'ajouter un élément compensateur 11 qui, à titre d'exemple non limitatif, peut revêtir la forme d'une lame à faces parallèles taillée dans un milieu biréfringent uniaxe. Sans cet élément, le dispositif des figures 1 et 2 est de type connu et ses propriétés électro-optiques sont décrites par les diagrammes des figures 3 et 4. A titre d'exemple, les caractéristiques d'un dispositif d'affichage à cristal liquide nématique en hélice sont :

Cristal liquide de type MERCK ZLI-3347

Différence de marche optique $(n_e-n_o)d$ :476nm

angle d'hélice :90°

préinclinaison des molécules de cristal liquide en l'absence de champ électrique: 2°

polariseurs de type SANRITZ LLC2 8218S

Tension d'état"ouvert" :1,74 Volt

Tension d'état"fermé" : 5,40 Volt

Longueur d'onde de la lumière : 550 nm

La figure 3 exprime le facteur de transmission T en fonction de la tension de commande u. La figure 4 exprime par deux courbes les propriétés angulaires, c'est à dire la variation du rapport de contraste CR avec la direction du rayon lumineux R. En se reportant à la figure 1, on voit que les coordonnées angulaires du rayon lumineux sont Φ et θ. La coordonnée Φ donne l'orientation du plan π qui contient R et Z. La coordonnée θ fixe l'orientation de R par rapport à Z.

La courbe Φ=0 montre comment varie le rapport de contraste lors d'un balayage angulaire horizontal, tandis que la courbe Φ = π/2 concerne un balayage angulaire vertical. On note que le résultat est symétrique pour un balayage horizontal, alors qu'il est asymétrique et déporté à droite pour un balayage vertical. L'asymétrie et le déport à droite se comprennent aisément en examinant la vue de profil sur la figure 2. On voit que les molécules basculent dans la direction OZ en tournant sur elles-mêmes dans le sens déterminé par l'angle de préinclinaison, au lieu de rester sensiblement parallèles aux faces de la couche de cristal liquide. Dans ces conditions, lors d'un balayage angulaire vertical, comme indiqué par la flèche 14, la biréfringence résiduelle de la couche ne fait qu'augmenter, ce qui explique le déport sur la figure 4.

Les courbes des figures 3 et 4 sont établies dans l'hypothèse d'un élément 11 n'introduisant pas de compensation par biréfringence.

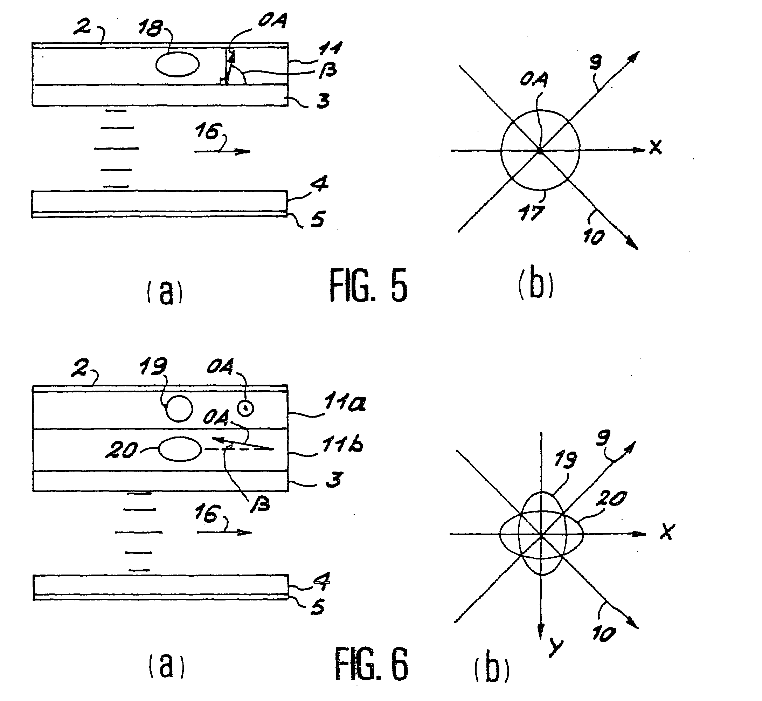

Selon un exemple de réalisation de l'invention illustrée à la figure 5, le moyen compensateur 11 prend la forme d'un milieu uniaxe de biréfringence négative dont l'axe optique OA est dans le plan XZ et fait avec la face de la couche de cristal liquide un angle (β) compris entre 75 et 90°. La flèche 16 indique la préinclinaison moléculaire. En (b), on voit que la section 17 de l'ellipsoide des indices est circulaire pour une propagation parallèle à l'axe OA. Pour chiffrer les performances d'un dispositif d'affichage, on peut se référer à un rapport de contraste intégré ICR dont l'expression mathématique est la suivante :

$$ICR(\alpha) = \frac{\int_0^{2\pi} d\Phi \int_0^{\alpha} d\theta\, T(\theta, \Phi, U_{off})}{\int_0^{2\pi} d\Phi \int_0^{\alpha} d\theta\, T(\theta, \Phi, U_{on})}$$

où : α est le demi angle d'ouverture d'un cône d'intégration

et $T(\theta, \Phi, U_{off})$ et $T(\theta, \Phi, U_{on})$ sont les facteurs de transmission pour les états "ouvert" et "fermé".

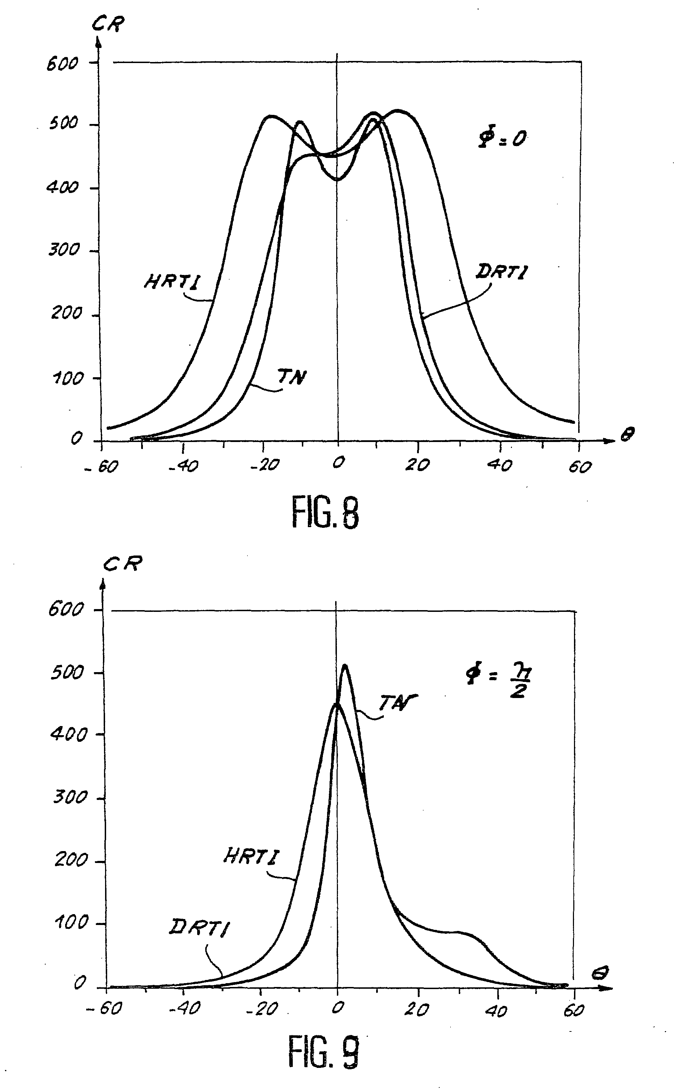

En adoptant pour le compensateur une différence de marche de -390 nm et un angle de l'axe optique de 83°, la grandeur ICR(20°) vaut 187, alors que pour une cellule à cristal liquide sans compensateur,on obtient une valeur de 77. Un tel compensateur peut être réalisé par une couche de cristal liquide discotique à préinclinaison homogène. Les courbes référencées HRTI sur les figures 8 et 9 se rapportent à cette variante de réalisation. On constate sur la figure 9 que le déport de la courbe HRTI est annulé , alors qu'il apparait sur la courbe TN qui représente la variation angulaire d'une cellule à cristal liquide sans compensateur 11. La figure 8 montre que dans la direction horizontale, le compensateur 11 élargit la répartition angulaire du rapport de contraste CR.

La compensation illustrée par la figure 5 utilise un seul élément 11 à biréfringence négative qui présente des propriétés isotropes pour une onde lumineuse se propageant suivant l'axe optique. Les courbes DRTI des figures 8 et 9 donnent pour comparison des indications sur la répartition angulaire du rapport de contraste CR lorsque la compensation est réalisée par deux éléments compensateurs à biréfringence positive comme représenté par exemple sur la figure 6.

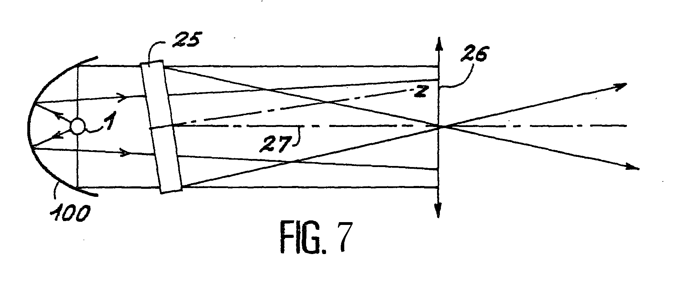

Sur la figure 7, on a représenté un système à projection comprenant un dispositif d'affichage à cristal liquide nématique en hélice 25 associé à une source lumineuse 1 munie d'un réflecteur 100. La projection sur écran est assurée par un objectif 26 et compte tenu du déport du maximum de contraste observé en direction verticale pour un dispositif d'affichage non compensé, on voit qu'il est nécessaire d'incliner le dispositif 25 par rapport à l'axe optique 27, afin que l'éclairement soit optimal dans la direction de l'axe optique. On pourrait aussi déporter le dispositif 25 par rapport à l'axe optique de l'objectif pour atteindre le même résultat. Dans les deux cas, on constate que ces mesures ne permettent pas d'utiliser au mieux l'objectif de projection puisque le dispositif 25 n'est pas correctement positionné du point de vue de l'imagerie optique. On a déjà proposé ci-dessus uneaolution à ce problème qui consiste à utiliser des milieux compensateurs uniaxes à biréfringence négative ayant l'axe optique légèrement incliné par rapport à la normale aux faces de la couche de cristal liquide.

D'après la description qui précède, on voit que le fait d'associer un compensateur à biréfringence négative uniaxe à une couche de cristal liquide nématique en hélice apporte dans tous les cas une meilleure répartition angulaire horizontale du rapport de contraste. En inclinant de manière appropriée l'axe optique du milieu biréfringent constituant le compensateur par rapport aux faces de la couche de cristal liquide, on peut en outre éliminer le déport de la répartition angulaire verticale.

Les améliorations apportées aux dispositifs à cristal liquide nématique en hélice sont d'ordre optique. Elles s'appliquent notamment aux dispositifs d'affichage à matrice passive ou active tels qu'on les utilise comme écrans d'ordinateur, ou pour les applications écran plat en télévision. On peut également appliquer ces perfectionnement aux systèmes à projection, ainsi qu'aux viseurs pour caméra video et caméscopes.

La description qui précède n'a été donnée qu'à titre d'exemple non limitatif et il va de soi que d'autres variantes peuvent être envisagées, sans sortir du cadre de l'invention.

## Revendications

1. Dispositif d'affichage à commande électrique mettant en oeuvre une couche de cristal liquide nématique en hélice de type TN disposée entre deux polariseurs, des moyens compensateurs uniaxes à biréfringence négative étant associés à ladite couche à l'intérieur de la cavité optique formée par lesdits polariseurs, **caractérisé en ce que** l'axe optique (OA) desdits moyens compensateurs uniaxes à biréfringence négative (11) présente une inclinaison par rapport à la normale (Z) aux faces principales de ladite couche, l'angle d'inclinaison étant légerement incliné par rapport à ladite normale (Z).

2. Dispositif selon la revendication 1, **caractérisé en ce que** l'orientation moléculaire (7) de ladite couche, en l'absence de tension électrique de commande, est ajustée pour faire tourner de 90° la polarisation rectiligne d'une onde lumineuse qui la traverse dans la direction normale (Z) par rapport à ses faces principales, lesdits polariseurs (2,5) ayant des polarisations croisées respectivement alignées avec la polarisation rectiligne de l'onde lumineuse au niveau desdites faces principales.

3. Dispositif selon l'une quelconque des revendications 1 et 2, **caractérisé en ce que** lesdits moyens compensateurs comprennent une lame biréfringente à faces parallèles (11), ledit axe optique (OA) étant celui du milieu constituant ladite lame.

4. Dispositif selon l'une quelconque des revendications 1 à 3, **caractérisé en ce que** l'angle d'inclinaison est compris entre 0° e 15° par rapport à la normale (Z) aux faces principales.

5. Dispositif selon les revendications 3 et 4, **caractérisé en ce que** le moyen compensateur est réalisé par une couche de cristal liquide discotique à pré-inclinaison homogène.

6. Dispositif selon la revendication 3, **caractérisé en ce que** lesdites faces parallèles sont parallèles auxdites faces principales.

7. Système de projection d'images sur un écran comprenant un objectif de projection, **caractérisé en ce qu'**il comprend un dispositif d'affichage selon l'une quelconque des revendications précédentes et **en ce que** ledit dispositif d'affichage comprend une couche de cristal liquide ayant ses faces principales perpendiculaires et centrées par rapport à l'axe optique dudit objectif de projection.

## Patentansprüche

1. Wiedergabevorrichtung mit elektrischer Steuerung und Anwendung einer gedrehten nematischen Flüssigkristallschicht vom Typ TN, die zwischen zwei Polarisatoren liegt, wobei uniaxiale Kompensationsmittel mit negativer Doppelbrechung der Schicht im Inneren der durch die Polarisatoren gebildeten optischen Kammer zugeordnet sind,

**dadurch gekennzeichnet, daß**

die optische Achse (OA) der uniaxialen Kompensationsmittel mit einer negativen Doppelbrechung (11) eine Neigung zu der Normalen (Z) auf den Hauptflächen der Schicht aufweist und der Neigungswinkel leicht gegenüber der Normalen (Z) geneigt ist.

2. Vorrichtung nach Anspruch 1, **dadurch gekennzeichnet, daß** die molekulare Orientierung (7) der Schicht bei Abwesenheit der elektrischen Steuerspannung so eingestellt ist, daß eine Drehung um 90° der geradlinigen Polarisation einer Lichtwelle entsteht, die sie in der Richtung der Normalen (Z) relativ zu ihren Hauptflächen durchdringt, und daß die Polarisatoren (2, 5) gekreuzte Polarisationen aufweisen, die jeweils mit der geradlinigen Polarisation der Lichtwelle bei den Hauptflächen ausgerichtet sind.

3. Vorrichtung nach einem der Ansprüche 1 und 2, **dadurch gekennzeichnet, daß** die Kompensationsmittel eine doppelbrechende Platte (11) mit parallelen Flächen aufweist und die optische Achse (OA) diejenige des die Platte bildenden Mediums ist.

4. Vorrichtung nach einem der Ansprüche 1 bis 3, **dadurch gekennzeichnet, daß** der Neigungswinkel zwischen 0° und 15° relativ zu der Normalen (Z) auf den Hauptflächen liegt.

5. Vorrichtung nach Anspruch 3 und 4, **dadurch gekennzeichnet, daß** die Kompensationsmittel durch eine diskotische Flüssigkristallschicht mit einer homogenen Vorneigung gebildet ist.

6. Vorrichtung nach Anspruch 3, **dadurch gekennzeichnet, daß** die parallelen Flächen parallel zu den Hauptflächen liegen.

7. System zur Projektion von Bildern auf einen Schirm mit einem Projektionsobjektiv, **dadurch gekennzeichnet, daß** es eine Wiedergabevorrichtung nach einem der vorangehenden Ansprüche enthält und daß die Wiedergabevorrichtung eine Flüssigkristallschicht mit Hauptflächen enthält, die senkrecht und zentriert zu der optischen Achse des Projektionsobjektivs liegen.

**Claims**

1. An electrically controlled display device implementing a layer of TN type twisted nematic liquid crystal placed between two polarizers, uniaxial compensating means with negative birefringence being associated with said layer within the optical cavity formed by said polarizers, wherein the optical axis (OA) of said uniaxial compensating means (11) with negative birefringence have an inclination with respect to the normal (Z) to the main faces of said layer, the inclination angle being slightly inclined with respect to said normal (Z).

2. A device according to claim 1, wherein the molecular orientation (7) of said layer, when there is no electrical control voltage, is adjusted to bring about a 90° rotation of the rectilinear polarization of a light wave that goes through it in the direction that is normal (Z) with respect to its main faces, said polarizers (2,5) having crossed polarization directions respectively aligned with the rectilinear polarization of said light wave at said main faces.

3. A device according to either claim 1 or 2, wherein said compensating means comprises a birefringent plate with parallel faces, said optical axis (OA) being that of the medium constituting said plate.

4. A device according to either of claims 1 to 3, wherein the inclination angle is comprised between 0° and 15° with respect to the normal (Z) to the main faces.

5. A device according to claims 3 and 4, wherein the compensating means is made of a discotic liquid crystal layer with homogeneous pre-inclination.

6. A device according to claim 3, wherein said parallel faces are parallel to said main faces.

7. A system for the projection of images on a screen comprising a projection lens, wherein said system comprises a display device according to either of preceding claims, and wherein said display device includes a liquid crystal layer having its main faces perpendicular and centered with respect to the optical axis of said projection lens.

FIG. 2

FIG.1

6

FIG. 3

FIG. 4

(a)     FIG. 5     (b)

(a)     FIG. 6     (b)

FIG. 7

FIG. 8

FIG. 9